# EUROPEAN PATENT APPLICATION

(11) **EP 4 633 126 A1**
(43) Date of publication of application: **15.10.2025**
(21) Application number: 25167908.0
(22) Date of filing: 02.04.2025
(51) Int. Cl.: H04N 1/00

(54) **DOCUMENT CONVEYING DEVICE**

(30) Priority: 11.04.2024 JP 2024063737
(71) Applicant: KYOCERA Document Solutions Inc., Osaka-shi, Osaka, 540-8585 (JP)
(72) Inventor: NGUYEN, Kien Tran, Osaka-shi, Osaka, 540-8585 (JP)
(74) Representative: Kurig, Thomas

(57) **Abstract**

A document conveying device (1) includes a conveyance path. The conveyance path includes a carry-in path (31), a reading path (33), an escape path (35), a loop path (37), and a discharge path (39). The carry-in path (31) is formed between a document feed port (15) and a first passing point (M1) in front of the reading position (P). The reading path (33) is formed between the first passing point (M1) and a second passage point (M2) beyond the reading position (P), and passes through the reading position (P). The escape path (35) is formed between the first passing point (M1) and the second passing point (M2), and does not through the reading position (P). The loop path (37) starts from the second passing point (M2) and returns to the second passing point (M2). The discharge path (39) is formed between the first passing point (M1) and a document discharge port (17).

## Description

### BACKGROUND

The present disclosure relates to a document conveying device which conveys a document and reads the document in a doble-sided readable manner.

In the document conveying device, the document is conveyed through an entrance of a conveyance path to an exit via a reading position. When the images of both sides of the document are read, it is necessary to convey the document to the reading position in an inverted state, and therefore, an inversion conveyance path for inverting the document is provided.

An image forming apparatus disclosed in JP2009-17178 is provided with a document inversion path that is branched from a conveyance path at a branch point passing through a reading position and merged with the conveyance path at a merging point upstream from the reading position. At the time of double-sided reading, the document is conveyed to the document inversion path at the branch point, and switched back at the document inversion path to invert the document. After that, the document is conveyed to the conveyance path at the merging point, and after the image on the rear side is read when the document passes through the reading position, the document is discharged through a discharge port.

Also, an automatic document feeding device disclosed in JPH8-286436 is provided with an inversion document conveyance path that returns to a reading position after passing the read position. The inversion document conveyance path is branched to a discharge path toward a discharge port. When the document is passed through the inversion document conveyance path, the document is inverted, and the image on the rear side is read when the document passes through the reading position. Thereafter, the document is conveyed along a discharge path leading to another discharge port, and discharged through the discharge port.

However, in the former configuration of the image forming apparatus, the mechanism and control for switching back the document at the time of double-sided reading is complicated. Furthermore, a waiting time for the double-sided reading of a continuously conveyed document is long, resulting in reduced productivity. In the latter configuration of the automatic document feeding device, the inversion document conveyance path and multiple discharge paths must be arranged in a narrow space, and there is a risk that the document will not be conveyed smoothly.

### SUMMARY

A document conveying device according to the present disclosure includes a conveyance path. The conveyance path is formed between a document feed port and a document discharge port, and along which a document is conveyed through a reading position. The conveyance path includes a carry-in path, a reading path, an escape path, a loop path, and a discharge path. The carry-in path is formed between the document feed port and a first passing point in front of the reading position. The reading path is formed between the first passing point and a second passage point beyond the reading position, and passes through the reading position. The escape path is formed between the first passing point and the second passing point, and does not through the reading position. The loop path starts from the second passing point and returns to the second passing point. The discharge path is formed between the first passing point and the document discharge port. The document is conveyed through the carry-in path, the reading path, the loop path, the escape path, and the discharge path in this order at a time of single-sided reading. The document is conveyed through the carry-in path, the reading path, the loop path, the reading path, and the discharge path in this order at a time of doble-sided reading.

### BRIEF DESCRIPTION OF THE DRAWINGS

FIG. 1 is a front view schematically showing an internal structure of a document conveying device according to one embodiment of the present disclosure.
FIG. 2 is a front view schematically showing a part of the internal structure of the document conveying device according to the embodiment of the present disclosure.
FIG. 3A to FIG. 3D are diagrams showing a process of conveying a document in the case of single-sided reading, in the document conveying device according to the embodiment of the present disclosure.
FIG. 4A to FIG. 4D are diagrams showing a process of conveying a document in the case of double-sided reading, in the document conveying device according to the embodiment of the present disclosure.
FIG. 5 is a front view schematically showing an internal structure of a conventional document conveying device.
FIG. 6 is an example of a timing chart showing a conveyance of the document in the case of single-sided reading, in the document conveying device according to the embodiment of the present disclosure and the conventional document conveying device.
FIG. 7 is an example of a timing chart showing a conveyance of the document in the case of double-sided reading, in the document conveying device according to the embodiment of the present disclosure and the conventional document conveying device.

### DETAILED DESCRIPTION

Hereinafter, with reference to the drawings, a document conveying device according to one embodiment of the present disclosure will be described.

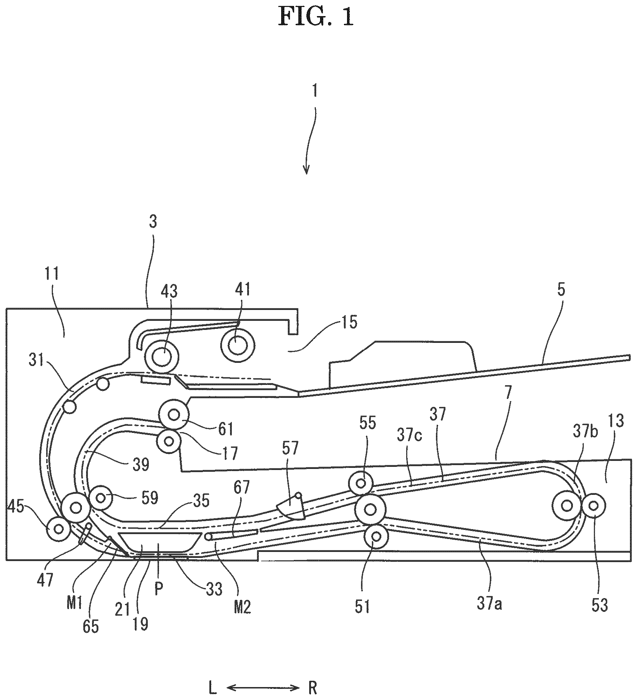

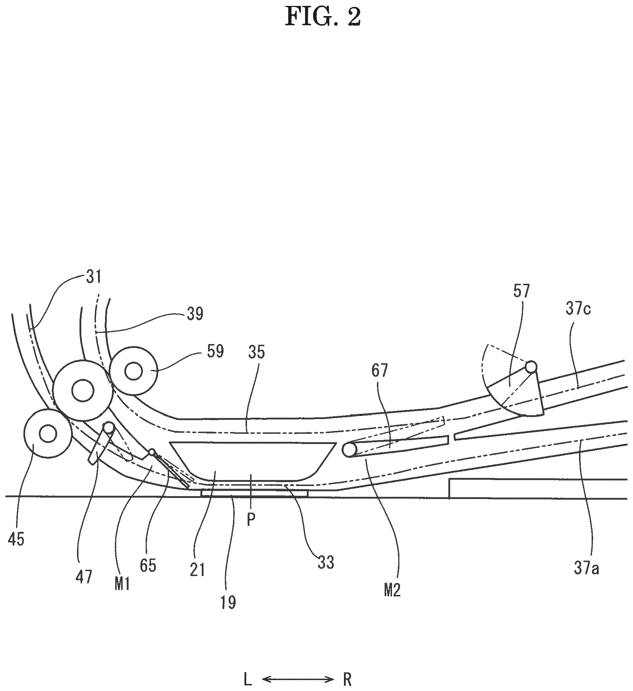

First, the structure of the document conveying device 1 will be described with reference to FIG. 1 and FIG. 2. FIG. 1 and FIG. 2 are front views schematically showing the internal structure of the document conveying device 1. In each figure, L and R indicate the left and right sides of the document conveying device 1, respectively.

The document conveying device 1 is placed on, for example, an upper surface of an image reading devices (not shown). The document conveying device 1 automatically conveys a document, and the image reading device reads an image on one side of the conveyed document. The description of the image reading device is omitted.

The document conveying device 1 is provided with a conveying part 3 which conveys the document, a sheet feeding tray 5 on which the document whose image is to be read by the conveying part 3 is placed, and a discharge tray 7 on which the document whose image has read by the conveying part 3 is loaded.

First, the conveying part 3 will be described. The conveying part 3 is substantially L-shaped when viewed from the front side, and has a main conveying part 11 on the left side and a loop conveying part 13 on the right side. A height of the main conveying part 11 is higher than a height of the loop conveying part 13. A sheet feed port 15 and a sheet discharge port 17 are formed on the right side of the main conveying part 11. The sheet discharge port 17 is disposed below the sheet feed port 15.

In the conveying part 3, a document conveyance path passing through a reading position P of the document by the image reading device is formed. The reading position P is a position facing a reading sensor of the image reading device from the upper side. An opening facing the reading sensor is formed at the right end portion of the lower surface of the main conveying part 11. The opening is covered with a transparent glass plate 19. Above the glass plate 19, a reading guide 21 is disposed at a predetermined interval. When the document is conveyed between the reading guide 21 and the glass plate 19, an image of the document is read by the image reading device. A predetermined position between the reading guide 21 and the glass plate 19 is set as the reading position P.

The conveyance path includes a carry-in path 31, a reading path 33, an escape path 35, a loop path 37, and a discharge path 39. The carry-in path 31, the reading path 33, the escape path 35, and the discharge path 39 are formed in the main conveying part 11, and the loop path 37 is formed in the loop conveying part 13.

First, the carry-in path 31 will be described. The carry-in path 31 is formed between the sheet feed port 15 and a first passing point M1 in front of the reading position P so as to curve downward from the sheet feed port 15 toward the reading position P. On thee carry-in path 31, a pickup roller 41, a separation roller unit 43, and a pair of carry-in rollers 45 are provided in order from the upstream side in a conveyance direction. The pair of carry-in rollers 45 includes a driving roller and a driven roller rotating in accordance with the driving roller. On the carry-in path 31, a roller for guiding the conveyance of the document may be provided as necessary.

On the carry-in path 31, a first actuator 47 and a first optical sensor (not shown) whose optical path is formed or blocked by the first actuator 47 are provided in front of the first passing point M1. The first actuator 47 is turnably supported so as to cross the carry-in path 31. The first actuator 47 is turned by being pushed by the document passing through the carry-in path 31 (see the two-dot chain line in FIG. 2). When the first actuator 47 is turned, the optical path of the optical sensor is blocked by the first actuator 47, and the optical sensor is switched from an OFF state to an ON state. When the first actuator 47 returns to its original posture and is separated from the optical path, the optical sensor is switched from the ON state to the OFF state. The first optical sensor outputs an ON signal indicating the ON state and an OFF signal indicating the OFF state to a control unit (not shown).

Next, the reading path 33 will be described. The reading path 33 is formed substantially linearly between the first passing point M1 and a second passing point M2 so as to pass through the reading position P. When the document is conveyed through the reading path 33 and passes through the reading position P, an image of one side (front side) of the document is read by the reading sensor of the image reading device.

Next, the escape path 35 will be described. The escape path 35 is formed between the first passing point M1 and the second passing point M2 so as not to pass through the reading position P. In this example, the escape path 35 is formed in a substantially straight line above the reading guide 21.

Next, the loop path 37 will be described. The loop path 37 is formed so as to start from the second passing point M2 and return to the second passing point M2. In this example, the loop path 37 contains a substantially horizontal going path 37a extending rightward from the second passing point M2, a curved path 37b curved upward from the going path 37a, and a returning path 37c inclined downward from the curved path 37b toward the second passing point M2. On the going path 37a, the curved path 37b, and the returning path 37c, a first, second, and third pairs of conveying rollers 51, 53, and 55 are provided, respectively. Each of the first, second, and third pairs of conveying rollers 51, 53, and 55 includes a driving roller and a driven roller rotating in accordance with the driving roller. The driving roller of the first pair of conveying rollers 51 is used as the driving roller of the third pair of conveying rollers 55. The first pair of conveying rollers 51 is an example of the pair of going-side conveying rollers in the present disclosure, and the third pair of conveying rollers 55 is an example of the pair of returning-side conveying rollers in the present disclosure.

A second actuator 57 and a second optical sensor (not shown) whose optical path is formed or blocked by the second actuator 57 are provided near the exit of the returning path 37c (a position near the second passing point M2). The second actuator 57 is turnably supported so as to cross the returning path 37c. The second actuator 57 is turned by being pushed by the document passing through the returning path 37c (see the double-dashed line in FIG. 2). When the second actuator 57 is turned, the optical path of the optical sensor is blocked by the second actuator 57, and the optical sensor is switched from an OFF state to an ON state. When the second actuator 57 is returned to its original posture and is separated from the optical path, the optical sensor is switched from the ON state to the OFF state. The second optical sensor outputs an ON signal indicating the ON state and an OFF signal indicating the OFF state to the control unit (not shown) .

Next, the discharge path 39 will be described. The discharge path 39 is formed between the first passing point M1 and the discharge port 17 so as to curve upward from the first passing point M1 toward the discharge port 17. On the discharge path 39, a first pair of discharge rollers 59 and a second pair of discharge rollers 61 are provided in order from the upstream side in the conveyance direction. Each of the first and second pairs of discharge rollers 59 and 61 includes a driving roller and a driven roller rotating in accordance with the driving roller. The driving roller of the first pair of discharge rollers 59 is used as the driving roller of the pair of carry-in rollers 45.

In addition, a first branch guide 65 and a second branch guide 67 are provided at the first passing point M1 and the second passing point M2, respectively.

First, the first branch guide 65 will be described. The first branch guide 65 is a relatively lightweight sheet-like member. As shown in FIG. 2, the first branch guide 65 is turnably supported at a branch point between the carry-in path 31 and the discharge path 39. The first branch guide 65 is turned by its own weight in a posture inclined downward toward the downstream side of the conveyance direction, and crosses the carry-in path 31. The tip of the first branch guide 65 is in contact with a guide surface on the lower side of the carry-in path 31. Thus, the document is guided from the reading path 33 to the discharge path 39. On the other hand, when the document is conveyed along the carry-in path 31, the first branch guide 65 is pushed by the document and turned upward (see the dashed line in FIG. 2), so that the conveyance of the document from the carry-in path 31 to the reading path 33 is not prevented.

Next, the second branch guide 67 will be described. The second branch guide 67 is provided so as to be turnable upward and downward around a rotational shaft provided on the side of the reading guide 21. The second branch guide 67 is turned in a first posture (see the solid line in FIG. 2) and a second posture (see the dashed line in FIG. 2). In the first posture, the reading path 33 communicates with the going path 37a of the loop path 37, and the returning path 37c of the loop path 37 communicates with the escape path 35. In the second posture, the returning path 37c of the loop path 37 communicates with the reading path 33. The second branch guide 67 is controlled by the control unit in accordance with the signals output from the first optical sensor and the second optical sensor, and turned to either the first posture or the second posture.

Next, the sheet feeding tray 5 will be described. As shown in FIG. 1, the sheet feeding tray 5 is supported below the sheet feed port 15 in a posture inclined downward toward the sheet feed port 15 of the conveying part 3.

Next, the discharge tray 7 will be described. As shown in FIG. 1, the discharge tray 7 is formed on the upper surface of the loop conveying part 13 below the discharge port 17 of the conveying part 3.

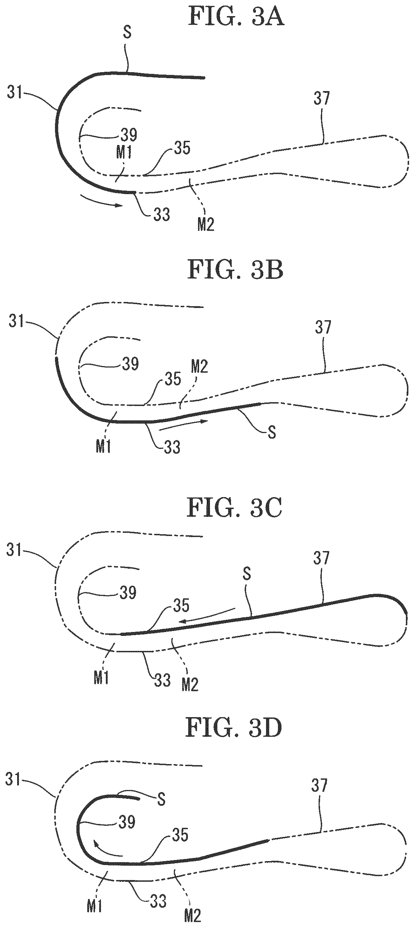

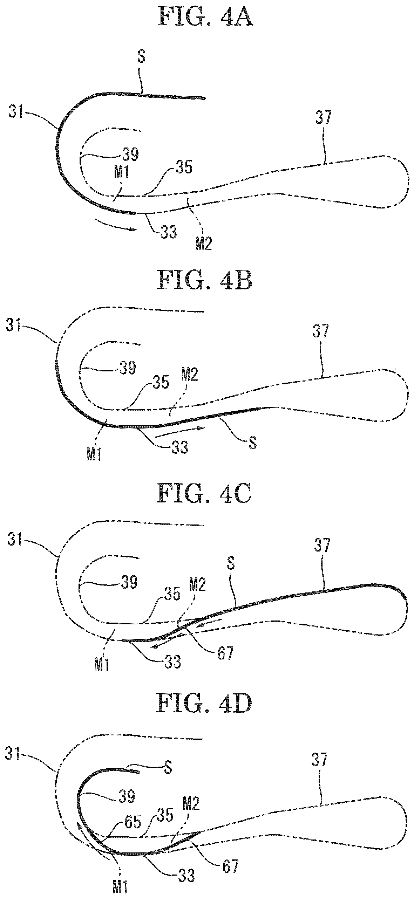

With reference to FIG. 1 and FIG. 2, FIG. 3A to FIG. 3D, and FIG. 4A to FIG. 4D, a document conveying operation in the document conveying device 1 having the above configuration will be described. FIG. 3A to FIG. 3D are diagrams showing a process of conveying the document in the case of double-sided reading, and FIG. 4A to FIG. 4D are diagrams showing a process of conveying the document in the case of double-sided reading. In the initial state, the first actuator 47 is turned to cross the carry-in path 31, and the second actuator 57 is turned to cross the returning path 37c. In the initial state, the first branch guide 65 is turned by its own weight in the posture inclined downward toward the downstream side of the conveyance direction, and crosses the carry-in path 31. The second branch guide 67 is turned in the first posture.

An operator selects a single-side reading mode for reading an image on one side of the document or a double-side reading mode for reading images on both sides of the document, and inputs it to the control unit.

First, the single-sided reading mode will be described. When the single-sided reading mode is input to the control unit, the control unit ignores the signals input from the first optical sensor and the second optical sensor. That is, the control unit maintains the second branch guide 67 in the first posture regardless of the signals input from both sensors. The document S placed on the sheet feeding tray 5 is fed by the pickup roller 41, separated one by one by the separation roller unit 43, and then sent to the carry-in path 31, and then conveyed by the pair of carry-in rollers 45. When the document S passes through the carry-in path 31, the first actuator 47 is pushed by the document S to be turned, but the switching of the first optical sensor due to the turning of the first actuator 47 is ignored as described above.

When the leading end of the document S reaches the first passing point M1, the first branch guide 65 is pushed up by the document. Then, as shown in FIG. 3A, the document S is conveyed to the reading path 33 below the first branch guide 65. After the document S passes through the first branch guide 65, the first branch guide 65 returns to the original posture. When the document S passes through the reading position P on the reading path 33, the image on one side of the document S is read by the image reading device.

Thereafter, as shown in FIG. 3B, the document S is guided to the going path 37a of the loop path 37 by the second branch guide 67 at the second passing point M2. The document S is conveyed along the loop path 37 by three pairs of conveying rollers 51, 53 and 55. When the document S is conveyed through the returning path 37c of the loop path 37, the second actuator 57 is pushed by the document to be turned, but the switching of the second optical sensor due to the turning of the second actuator 57 is ignored as described above.

The document S returns to the second passing point M2, and is guided from the loop path 37 to the escape path 35 by the second branch guide 67 as shown in FIG. 3C. Thereafter, as shown in FIG. 3D, the document S is conveyed from the escape path 35 to the discharge path 39 through the first passing point M1. The document S is conveyed to the discharge port 17 by the first pair of discharge rollers 59, and then discharged to the discharge tray 7 through the discharge port 17 by the second pair of discharge rollers 61.

Next, the double-sided reading mode will be described. When the double-sided reading mode is input to the control unit, the control unit switches the second branch guide 67 according to the signals input from the first optical sensor and the second optical sensor. The document S placed on the sheet feeding tray 5 is fed by the pickup roller 41, separated one by one by the separation roller unit 43, and then sent to the carry-in path 31, and then conveyed by the pair of carry-in rollers 45. When the document S passes through the carry-in path 31, the first actuator 47 is pushed by the document S to be turned. When the document S is the first sheet, the control unit ignores the switching of the first optical sensor due to the turning of the first actuator 47.

When the leading end of the document S reaches the first passing point M1, the first branch guide 65 is pushed up by the document S. As shown in FIG. 4A, the document S is conveyed to the reading path 33 below the first branch guide 65. After the document S passes through the first branch guide 65, the first branch guide 65 returns to its original posture. When the document S passes through the reading position P on the reading path 33, the image of one side of the document S is read by the image reading device.

Thereafter, as shown in FIG. 4B, the document S is guided to the going path 37a of the loop path 37 by the second branch guide 67 at the second passing point M2. The document S is conveyed along the loop path 37 by three pairs of conveying rollers 51, 53 and 55. When the document S is conveyed through the returning path 37c of the loop path 37, the second actuator 57 is pushed by the document S to be turned. Thereby, the second optical sensor is switched from the OFF state to the ON state, and the ON signal is outputted to the control unit. When the ON signal is input from the second optical sensor, the control unit switches the second branch guide 67 from the first posture to the second posture (see the two-dot chain line in FIG. 2).

Thus, as shown in FIG. 4C, the document S is guided from the returning path 37c to the reading path 33 by the second branch guide 67. The document S is conveyed to the reading path 33 from an opposite direction to the first direction with a posture the front side facing upward. When the document S passes through the reading position P on the reading path 33, an image on the rear side of the document S is read by the reading sensor of the image reading device.

Thereafter, as shown in FIG. 4D, the document S is guided from the escape path 35 to the discharge path 39 by the first branch guide 65 at the first passing point M1. The document S is conveyed to the discharge port 17 along the discharge path 39 by the first pair of discharge rollers 59, and discharged to the discharge tray 7 through the discharge port 17 by the second pair of discharge rollers 61.

When there are two or more documents S, the second document S is conveyed to the carry-in path 31 at a predetermined timing. When the second document S passes through the carry-in path 31, the first actuator 47 is pushed by the document S to be turned. Then, the second optical sensor is switched from the OFF state to the ON state, and outputs the ON signal to the control unit. When the ON signal is input to the control unit, the control unit turns the second branch guide 67 from the second posture to the first posture (see the solid line in FIG. 2). Thereafter, the document S is conveyed in the same manner as the first document S, and images on the both sides are read.

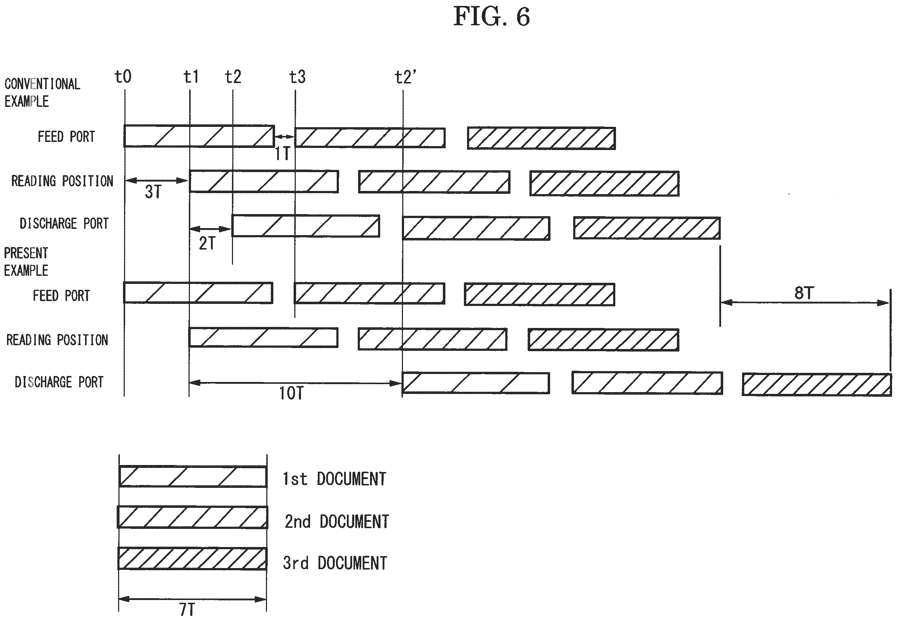

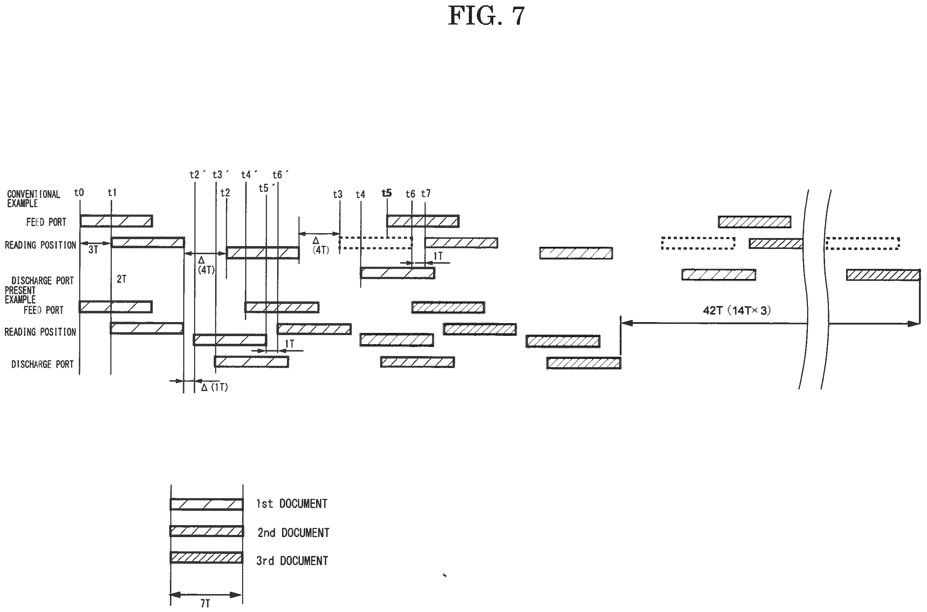

Next, an example of the document conveying time by the document conveying device 1 according to the present disclosure and a conventional document conveying device 101 will be described with reference to the timing charts of FIG. 6 and FIG. 7. Each figure shows timing charts in a case where three documents (an A4 horizontal size, a document length along the conveyance direction: about 210 mm) are consecutively conveyed.

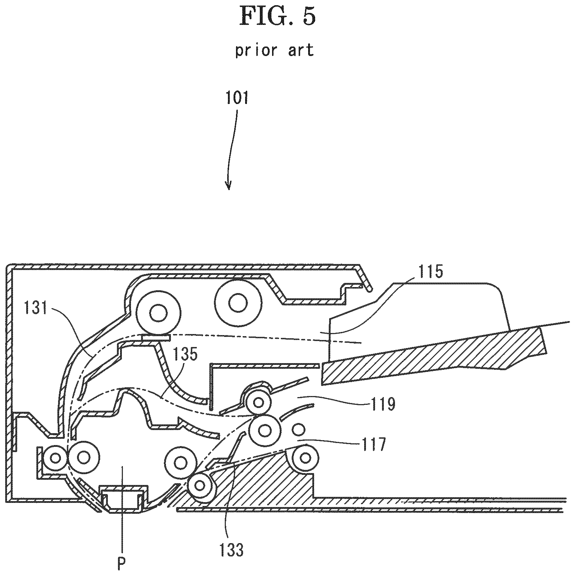

First, an example of the conventional document conveying device 101 will be briefly described with reference to FIG. 5. FIG. 5 is a front view schematically showing the conventional document conveying device 101. The conventional document conveying device 101 includes a carry-in path 131 extending from a sheet feed port 115 to a reading position P, a discharge path 133 extending from the reading position P to a discharge port 117, and an inversion path 135 that is merged with the carry-in path 131 from the reading position P through a switchback port 119.

In the case of single-sided reading, the document is conveyed to the reading position P through the carry-in path 131, and the image on the front side is read at the reading position P. Thereafter, the document is conveyed to the discharge port 117 through the discharge path 133, and discharged through the discharge port 117. In the case of double-sided reading, the document is conveyed to the reading position P through the carry-in path 131, and the image on the front side is read at the reading position P. Thereafter, the document is switched back through the inversion path 135, and returned to the carry-in path 131. When the document is switched back, the document is inverted. Thereafter, the document is conveyed to the reading position P through the carry-in path 131, and the image on the rear side is read at the reading position P. Thereafter, the document is conveyed to the discharge port 117 through the discharge path 133, and discharged through the discharge port 117. When a plurality of the documents in a bundle are continuously double-sided read, an inversion conveying is performed in which the document whose image on the rear side is read at the reading position P is switched back through the inversion path 135 and returned to the carry-in path 131. Thereafter, the document is conveyed to the discharge port 117 through the discharge path 133 and discharged through the discharge port 117. As a result, the documents are discharged in the same order (orientation) as the documents in the bundle before reading.

The parameters of the document conveying devices 1 and 101 are set as follows.
A distance from the sheet feed port to the reading position (a length of the carry-in path) (common) L1 : **90 mm;**
A distance from the reading position to the discharge port (a length of the discharge path) (common) L2 : 60 mm;
A distance of the inversion path (conventional device art) L3 : L2<L3<L1,
A conveying time of the document (length 210 mm) (common): 7T,
A document interval (common): 30 mm (1T),
A time required for reverse the conveyance direction (including a temporary stop time when the conveyance direction is reversed, it is assumed that the document is reversed after sending out for a length of 180 mm from the switchback port) (conventional device): 3T, and A distance of the loop path (a distance at which the document (length 210 mm) reaches the reading position at the reference interval (1T, 30 mm) after the trailing end of the document passes the reading position) (present disclosure): about 240 mm.

First, the single-sided reading will be described with reference to FIG. 6. First, the conventional document conveying device 101 will be described. At the conveyance start time t0, the leading end of the first document is conveyed from the sheet feed port 115. The document is conveyed along the carry-in path 131 through the sheet feed port 115 over a period of 7T. The leading end of the document reaches the reading position P at a time t1 after a lapse of period 3T (the period to be conveyed through the carry-in path 90 mm) from the conveyance start time t0. The document passes through the reading position P over a period of 7T, and is conveyed along the discharge path 133. The leading end of the document reaches the discharge port 117 at a time t2 after a lapse of period 2T (the period to be conveyed through the discharge path 60 mm) from the time t1. The document is discharged through the discharge port 117 over a period of 7T.

The second document is conveyed from the sheet feed port 115 at a time t3 at which the document interval 1T elapses after the first document has passed through the sheet feed port 115 over a period of 7T. Thereafter, the document is conveyed in the same manner as the first document. The third document is also conveyed in the same manner as the first document.

Next, the document conveying device 1 according to the present disclosure will be described. At the conveyance start time t0, the leading end of the first document is conveyed from the sheet feed port 15. The document is conveyed along the carry-in path 131 through the sheet feed port 115 over a period of 7T. The leading end of the document reaches the reading position P at a time t1 after a lapse of period 3T (the period to be conveyed through the carry-in path 90 mm) from the conveyance start time t0. The document is conveyed along the loop path 37 through the reading position P over a period of 7T. The leading end of the document reaches the discharge port 17 at time t2' after a lapse of period 10T (the period to be conveyed through the loop path 240 mm + the discharge path 60 mm) from the time t1. The document is discharged through the discharge port 17 over a period of 7T.

The second document is conveyed from the sheet feed port 15 at a time t3 at which the document interval 1T elapses after the first document has passed through the sheet feed port 15 over a period of T7. Thereafter, the document is conveyed in the same manner as the first document. The third document is also conveyed in the same manner as the first document.

As described above, in the case of single-sided reading, the reading end time for each document is earlier by a period 8T in the conventional document conveying device 101 than in the document conveying device 1 of the present disclosure. However, the difference in the reading end time of the final document does not change regardless of the number of documents.

Next, the double-sided reading will be described with reference to FIG. 7. First, the conventional device will be described. At the conveyance start time t0, the leading end of the first document is conveyed from the sheet feed port 115. The document is conveyed along the carry-in path 131 through the sheet feed port 115 over a period of 7T. The leading end of the document reaches the reading position P at a time t1 after a lapse of period 3T (the period to be conveyed through the carry-in path 90 mm) from the conveyance start time t0. The document passes through the reading position P over a period of 7T, and the image on the front side of the document is read. Thereafter, the document is conveyed along the inversion path 135. The leading end of the document reaches the reading position at a time t2 after a lapse of period 4T from the time when the trailing end of the document passes the reading position P. The document passes through the reading position P over a period of 7T, and the image on the rear side of the document is read. Thereafter, the document is switched back on the inversion path 135 again for the inversion conveying, reaches the reading position P at time t3 after a lapse of period 4T from the time when the trailing end of the document passes through the reading position P, and passes through the reading position P over a period of 7T (see the dotted line in FIG. 7). At the time of switchback, the leading end portion and the trailing end portion of the document temporarily overlap each other in the inversion path 135 and slide each other to move in the opposite direction. Thereafter, the document is conveyed along the discharge path 133. The leading end of the document reaches the discharge port 117 at a time t4 after a lapse of period 2T (the period to be conveyed through the discharge path 60 mm) from the time t3. The document is discharged through the discharge port 117 over a period of 7T.

The second document is conveyed so that the leading end of the second document reaches the reading position P at a time t7 when the period T1 elapses from the time t6 when the inversion-conveyed first document (see the dotted line in FIG. 7) passes through the reading position P. In order to convey the document so that the leading end of the document reaches the reading position at the time t7, the document is conveyed from the sheet feed port 115 at a time t5, which is a period 3T (the period to be conveyed through the carry-in path) earlier than the time t7. Thereafter, the document is conveyed in the same manner as the first document. The third document is conveyed in the same manner.

Next, the document conveying device 1 according to the present disclosure will be described. At the conveyance start time t0, the leading end of the first document is conveyed from the sheet feed port 15. The document is conveyed along the carry-in path through the sheet feed port 15 over a period of 7T. The leading end of the document reaches the reading position P at a time t1 after a lapse of period 3T (the period to be conveyed through the carry-in path 90 mm) from the conveyance start time t0. The document passes through the reading position over a period of 7T, and the image on the front side of the document is read. The document is then conveyed along the loop path 37. The leading end of the document reaches the reading position P at time t2' after a lapse of period 8T (the period to be conveyed through the loop path 240 mm) from the time t1. The document passes through the reading position P over a period of 7T, and the image on the rear side of the document is read. Thereafter, the document is conveyed along the discharge path 39. The leading end of the document reaches the discharge port 17 at time t3' after a lapse of period 2T (the period to be conveyed through the discharge path 60 mm) from the time t2'. The document is discharged from the discharge port 17 over a period of 7T.

The second document is conveyed so that the leading end of the second document reaches the reading position P at a time t6' when the period T1 elapses from the time t5' when the first document passing through the loop path 37 passes through the reading position P. In order to convey the document so that the leading edge of the document reaches the reading position P at time t6', the document is conveyed from the sheet feed port 15 at time t4', which is a period 3T (the period to be conveyed through the carry-in path) earlier than the time t6'. Thereafter, the document is conveyed in the same manner as the first document. The third document is conveyed in the same manner.

As described above, at the time of double-sided reading, the conveyance start time of the next document is determined according to the inversion conveying end time (t6) in the conventional device, and is determined according to the rear side reading end time (t5') in the present disclosure. In this example, the difference between the inversion conveying end time (t6) and the rear side reading end time (t5') is 14T. This difference increases as the number of documents increases. That is, the difference is accumulated by the number of documents. For example, when the number of documents is three, the difference is 3×14T. In the conventional device, when a plurality of the documents are conveyed, the inversion conveying is necessary in order to discharge the documents in the same order (orientation) as the documents before conveying. In the present disclosure, the documents can be discharged in the same order (orientation) as the documents before conveying without performing the inversion conveying, so that the conveyance time can be shortened. Thus, the productivity of the double-sided reading operation can be improved.

On the other hand, in the case of single-sided reading, a time when the reding of the first document is finished is earlier in the conventional device than in the document conveying device of the present disclosure. However, since the difference between them is independent of the number of documents, the productivity of the single-sided reading operation is not changed except for the difference in the reading end time of the first document.

In the document conveying device according to the present disclosure, the document conveyance direction is in one direction at the time of single-side reading and double-side reading, and it is not necessary to switch back the document. Therefore, since it is not necessary to invert the driving roller, a control of the driving rollers is easy.

Further, the driving roller of the pair of carry-in rollers 45 on the carry-in path 31 can also be used as the driving roller of the first pair of discharge rollers 59 on the discharge path 39. Further, the driving roller of the first pair of conveying rollers 51 on the loop path 37 can be used as the driving roller of the third pair of conveying rollers 55. Thus, the number of the roller for conveying the document can be reduced.

Further, since the first branch guide 65 is pushed up by the passing document to allow the document to be passed through the first branch guide 65, there is no need for a mechanism for turning the first branch guide 65 when the path is switched. Therefore, the control of the first branch guide 65 is simplified.

Furthermore, the upper surface of the loop conveying part 13 can be used as the discharge tray 7, in other words, the space below the discharge tray 7 can be effectively utilized.

In order to increase the productivity of double-sided reading of A4 size documents which are frequently used, a length of the loop path 37 is preferably a A4 vertical size or a A4 horizontal size. In this case, a document longer than these lengths (for example, an A3 size document) is discharged after the image on one side is read. For example, when a size of the document is detected by the first actuator 47 or the like and the document length exceeds the above length, the second branch guide 67 is switched to the first posture. As a result, the document is conveyed in the same manner as in the above-described single-side reading, and the image on one side is read.

While the present disclosure has been described for specific embodiments, the present disclosure is not limited to those embodiments. A person skilled in the art may modify the above embodiments without departing from the scope and spirit of the present disclosure.

## Claims

1. A document conveying device (1) comprising:
a conveyance path which is formed between a document feed port (15) and a document discharge port (17), and along which a document is conveyed through a reading position (P), wherein
the conveyance path includes;
a carry-in path (31) formed between the document feed port (15) and a first passing point (M1) in front of the reading position (P);
a reading path (33) formed between the first passing point (M1) and a second passage point (M2) beyond the reading position (P) that passes through the reading position (P);
an escape path (35) formed between the first passing point (M1) and the second passing point (M2) that does not through the reading position (P);
a loop path (37) which starts from the second passing point (M1) and returns to the second passing point (M1); and
a discharge path (39) formed between the first passing point (M1) and the document discharge port (17), wherein
the document is conveyed through the carry-in path (31), the reading path (33), the loop path (37), the escape path (35), and the discharge path (39) in this order at a time of single-sided reading, and,
the document is conveyed through the carry-in path (31), the reading path (33), the loop path (37), the reading path (33), and the discharge path (39) in this order at a time of doble-sided reading.

2. The document conveying device (1) according to claim **1,** comprising:
a first branch member (65) which is turnably supported above the carry-in path (31) at the first passing point (M1), and turned downward by its own weight to guide the document from the reading path (33) to the discharge path (39), wherein
when the document is conveyed from the carry-in path (31) to the reading path (33), the branch member (65) is pushed up by the document to be turned upward and to allow the document to pass through.

3. The document conveying device (1) according to claim **1,** comprising:
a second branch member (67) which is disposed at the second passing point (M2), and switched between a first posture that guides the document from the reading path (33) to the loop path (37) and guides the document from the loop path (37) to the escape path (35), and a second posture that guides the document from the loop path (37) to the reading path (33);
a first actuator (47) which is activated by the document being conveyed along the carry-in path (31); and
a second actuator (57) which is actuated by the document being conveyed along the loop path (37), wherein
at the time of doble-sided reading, the second branch member (67) is switched from the first posture to the second posture by the second actuator (57) so that the document is conveyed to the reading path (33),
after the document is passed the reading path (33), the second branch member (67) is switched from the second posture to the first posture so that a next document is conveyed from the reading path (33) to the loop path (37).

4. The document conveying device (1) according to claim **1,** comprising:
a discharge tray (7) on which the document discharged through the discharge port (17) is loaded, wherein
the loop path (37) is disposed below the discharge tray (7).

5. The document conveying device (1) according to claim **1,** wherein
a length of the loop path (37) is equal to a length of A4 vertical size or A4 horizontal size.

6. The document conveying device (1) according to claim **1,** comprising:
a pair of carry-in rollers (45) including a driving roller and a driven roller, which conveys the document along the carry-in path (31); and
a pair of discharge rollers (59) including a driving roller and a driven roller, which conveys the document along the discharge path (39) is also used as the driving roller of the pair of discharge rollers (59).

7. The document conveying device (1) according to claim **1,** comprising:
a pair of going conveying rollers (51) including a driving roller and a driven roller, which conveys the document along a going path (37a) of the loop path (37); and
a pair of returning conveying rollers (55) including a driving roller and a driven roller, which conveys the document along a returning path (37c) of the loop path (37), wherein
the driving roller of the pair of going conveying rollers (51) is also used as the driving roller of the pair of returning conveying rollers (55).
